# EUROPÄISCHE PATENTSCHRIFT

(11) **EP 0 572 631 B1**
(45) Veröffentlichungstag und Bekanntmachung des Hinweises auf die Patenterteilung: **01.05.1996**
(21) Anmeldenummer: 93901651.5
(22) Anmeldetag: 23.12.1992
(51) Int. Cl.: G02B 21/06

(54) **VERFAHREN UND EINRICHTUNG ZUR HELLIGKEITS- UND/ODER FARBTEMPERATURREGELUNG FÜR EIN MIKROSKOPISCHES BELEUCHTUNGSSYSTEM**
PROCESS AND DEVICE FOR BRIGHTNESS AND/OR COLOUR TEMPERATURE CONTROL FOR A MICROSCOPIC LIGHTING SYSTEM
PROCEDE ET INSTALLATION DE REGLAGE DE LA LUMINOSITE ET/OU DE LA TEMPERATURE DE COULEUR POUR UN SYSTEME D'ECLAIRAGE DE MICROSCOPE

(30) Priorität: 24.12.1991 DE 4142925
(43) Veröffentlichungstag der Anmeldung: 08.12.1993
(73) Patentinhaber: LEICA MIKROSKOPIE UND SYSTEME GmbH, D-35530 Wetzlar (DE)
(72) Erfinder: REMER, Lucius, W-64549 Mörfelden-Walldorf (DE); SCHÖNENBORN, Jörg, W-35578 Wetzlar (DE); GILBERT, Manfred, W-35606 SOLMS (DE)
(74) Vertreter: Stamer, Harald, Dipl.-Phys.
(86) Internationale Anmeldenummer: DE9201085
(87) Internationale Veröffentlichungsnummer: WO9313444

(56) Entgegenhaltungen:
- DE-A- 3 535 749
- DE-A- 3 606 755
- DE-U- 8 802 996
- FR-A- 2 528 988
- PATENT ABSTRACTS OF JAPAN vol. 7, no. 210 (P-223)(1355) 16. September 1983 ; & JP-A-58 105 208

## Beschreibung

Die Erfindung betrifft ein Verfahren zur farbneutralen Helligkeitsregelung und/oder helligkeitsneutralen Farbtemperaturregelung für ein mikroskopisches Beleuchtungssystem mit den Merkmalen des Oberbegriffs der Patentansprüche 1 und 2, sowie eine Einrichtung zur Durchführung des Verfahrens.

Bei Beleuchtungseinrichtungen, die eine Glühlampe aufweisen, ist es bekannt, die Helligkeit des von einer Lichtquelle abgestrahlten Lichtes dadurch zu regeln, daß mittels eines elektrischen Schaltkreises die Lampenspannung verändert wird. Eine Regelung der Lampenspannung ist jedoch mit dem Nachteil verbunden, daß dadurch gleichzeitig die Farbtemperatur des Beleuchtungslichtes geändert wird. Eine fotografische Aufnahme ist mit diesen Lichtbedingungen nur unter Inkaufnahme von Farbfehlern im späteren fotografischen Bild möglich.

Aus der DE-OS 27 57 543 und DE-Gbm 88 02 996 sind Einrichtungen bekannt, welche diesen Fehler ausschließen. Beide Einrichtungen weisen eine Lichtquelle, ein Kondensorsystem und einen ringförmig ausgebildeten Lichtleiter auf. Zur Regelung der Beleuchtungsstärke ist in der DE-OS 27 57 543 ein Blendenschieber vorgesehen, der partiell in den Beleuchtungsstrahlengang zwischen den einzelnen Kondensoren einbringbar ist und so einen Teil des Strahlenbündels abdeckt. In der DE-Gbm 88 02 996 ist zur Regelung der Beleuchtungsstärke vor der Lichteintrittsfläche des Lichtleiters ein lichtundurchlässiger und verschieblich angeordneter Träger mit verschiedenen Lochrastern vorgesehen. Da der Lichtleiter in seinem Innern homogen ausgebildet ist, weist die Lichtaustrittsfläche des Lichtleiters eine gleichmäßige Lichtintensitätsverteilung auf. Mit derartigen Beleuchtungseinrichtungen ist eine Regelung der Beleuchtungsstärke ohne Veränderung der Farbtemperatur des Lichtes möglich. Nachteilig ist jedoch, daß neben einem beträchtlichen feinmechanischem Aufwand auch die gesamte Beleuchtungsstärke durch den Lichtleiter reduziert wird.

Aus der DE-OS 27 45 397 ist ein Lichtregler für Lichtleiterleuchten mit einer Vielzahl von Einzelfasern bekannt. Dazu ist im Beleuchtungsstrahlengang zwischen der Lampe und der Lichteintrittsfläche des Lichtleiters eine aus mehreren Kreissektorflächen ausgebildete Blende angeordnet.

Zur Beleuchtungsstärkeregulierung werden diese Kreissektorflächen mit einer Handhabe so gegeneinander verschoben, daß das Beleuchtungsstrahlenbündel in nachteiliger Weise asymmetrisch beschnitten wird. Auch läßt sich der Bereich hoher Abblendungsfaktoren nur ungenau einstellen.

Aus der DE-OS 27 01 764 ist ein Lichtflußregler zur Helligkeitsregelung von Beleuchtungseinrichtungen für Mikroskope bekannt. Dieser weist einen Träger und eine in Lichtrichtung angeordnete feststehende Schar von lichtdurchlässigen Kanälen auf. Über eine Schwenkeinrichtung ist der Träger im Beleuchtungsstrahlengang schwenkbar angeordnet. Diese Einrichtung ist jedoch sehr groß dimensioniert und benötigt durch die Schwenkeinrichtung zusätzlichen Raum im Beleuchtungsstrahlengang des Mikroskops.

Der Erfindung liegt daher die Aufgabe zugrunde, ein Verfahren und eine Vorrichtung für eine regelbare Beleuchtungseinrichtung für ein mikroskopisches Beleuchtungssystem anzugeben, bei dem der Wirkungsgrad des zur Beobachtung nutzbaren Beobachtungslichts optimiert wird und zusätzlich die Möglichkeit einer farbneutralen Helligkeitsregelung über einen großen Regelbereich und/oder die Möglichkeit einer helligkeitsneutralen Farbtemperaturregelung des Beleuchtungslichts in bedienungsfreundlicher Weise gegeben sein soll.

Diese Aufgabe wird erfindungsgemäß durch ein Verfahren mit den kennzeichnenden Merkmalen der Patentansprüche 1 bzw. 2 gelöst.

Bei einer Einrichtung zur Durchführung der erfindungsgemäßen Verfahren, ist neben der Hauptlichtquelle eine Nebenlichtquelle mit dem Farbfilter und eine Steuereinrichtung zur Regelung der beiden Lampenströme vorgesehen, wobei die Steuereinrichtung über den Regler den jeweiligen Strom für beide Lampen gleichzeitig so einstellt, daß
a) bei der farbneutralen Helligkeitsregelung die Helligkeit der Hauptlichtquelle über den Lampenstrom geregelt wird und gleichzeitig die veränderte Farbtemperatur des Beleuchtungslicht über eine Regelung des Lampenstroms der mit dem Farbfilter versehenen Nebenlichtquelle kompensiert wird (Anspruch 1),
b) bei der helligkeitsneutralen Farbtemperaturregelung die Farbtemperatur des Beleuchtungslicht über eine Regelung des Lampenstroms der mit dem Farbfilter versehenen Nebenlichtquelle geregelt wird und gleichzeitig die veränderte Helligkeit des Beleuchtungslichtes über eine Regelung des Lampenstroms der Hauptlichtquelle kompensiert wird (Anspruch 2).

Eine Einrichtung zur kombinierten Durchführung der erfindungsgemäßen Verfahren nach Anspruch 1 und Anspruch 2, weist neben der Hauptlichtquelle eine Nebenlichtquelle mit dem Farbfilter und eine Steuereinrichtung zur Regelung der beiden Lampenströme auf, wobei die Steuereinrichtung über zwei getrennt voneinander arbeitende Regler beide Lampenströme gleichzeitig so einstellt, daß bei der farbneutralen Helligkeitsregelung die Helligkeit der Hauptlichtquelle über den Lampenstrom geregelt wird und gleichzeitig die veränderte Farbtemperatur des Beleuchtungslicht über eine Regelung des Lampenstroms der Nebenlichtquelle kompensiert wird, und bei der helligkeitsneutralen Farbtemperaturregelung die Farbtemperatur des Beleuchtungslicht über eine Regelung des Lampenstroms der Nebenlichtquelle geregelt und gleichzeitig die veränderte Helligkeit des Beleuchtungslichtes über eine Regelung des Lampenstroms der Hauptlichtquelle kompensiert wird.

Vorteilhafte Weiterbildungen dieser Einrichtungen sind Gegenstand der Unteransprüche.

Hervorzuheben ist der Vorteil, daß unter Verwendung eines einzigen handelsüblichen Konversionsfilters über den gesamten Regelbereich das farbneutrale Emmissionsspektrum (Planck-Spektrum) in guter Näherung approximiert wird. Damit ist eine definierte Farbtemperatur für jeden Punkt innerhalb des Regelbereichs gegeben.

Die Erfindung zeichnet sich auch dadurch aus, daß die thermische Belastung des mikroskopischen Gerätes vermindert wird, indem der zur Beobachtung nutzbare Anteil des Beleuchtungslichts optimiert wird.

In der Zeichnung ist der Ablauf des bzw. der erfindungsgemäßen Verfahren(s) in Verbindung mit einer dazu geeigneten Einrichtung schematisch dargestellt.

Es zeigen:
- Fig. 1:: Mikroskopstativ mit Hauptlichtquelle und angesetztem Lampenhaus mit Nebenlichtquelle
- Fig. 2:: Graphische Darstellung der Planck-Spektrums bei verschiedenen Intensitäten
- Fig. 3:: Graphische Darstellung des Regelbereichs der Beleuchtungseinrichtung

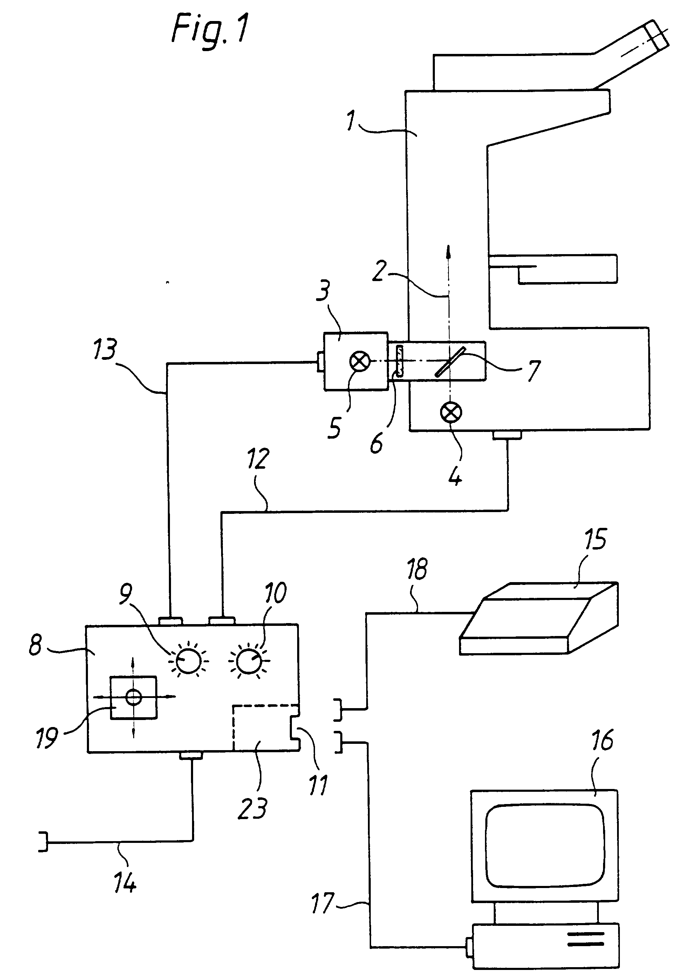

Die Figur 1 zeigt ein Mikroskopstativ 1, einen Beleuchtungsstrahlengang 2 mit einer Hauptlichtquelle 4, ein extern ansetzbares Lampengehäuse 3 mit einer Nebenlichtquelle 5, ein feststehendes Konversionsfilter 6 und einen teildurchlässigen Umlenkspiegel 7. Sowohl die Hauptlichtquelle 4 als auch die Nebenlichtquelle 5 werden extern elektrisch versorgt. Dazu sind die Stromleitungen 12 bzw. 13 mit einer Steuereinrichtung 8 verbunden. Diese Steuereinrichtung weist zwei stromstabilisierte Netzteile (nicht mit dargestellt), einen Regler 9 zur Einstellung der Farbtemperatur, einen Regler 10 zur Einstellung der Helligkeit des Beleuchtungslichts sowie eine Schnittstelle 11 (RS 232) zum Anschluß von übergeordneten Steuergeräten 15, 16 auf. Die beiden Regler 9 und 10 sind vorzugsweise als sogenannte Mehrstufenschalter ausgebildet. Die Stromversorgung der Steuereinrichtung 8 mit den stabilisierten Netzteilen erfolgt über die Leitung 14. In dieser Steuereinrichtung 8 ist eine Speichereinheit 23 vorgesehen, in der vorgegebene Stromwerte bzw. entsprechende Stromwertepaare zur Ansteuerung der beiden Lichtquellen 4 und 5 entsprechend den Reglerstellungen 9 bzw. 10 abgespeichert sind.

In dieser Zeichnung ist ferner ein Doppelachsen-Schalthebel (Joystick) 19 dargestellt, der die Funktion der beiden separaten Drehregler 9 und 10 übernehmen kann. Die beiden Drehregler 9 und 10 können durch den Joystick 19 ersetzt werden.

Die Steuereinrichtung 8 ist so konzipiert, daß externe Steuergeräte, hier eine Fotosteuereinrichtung 15 mit Datenleitung 18 und ein Computer 16 mit einer Datenleitung 17, über die Schnittstelle 11 mit der Steuereinrichtung 8 verbunden werden können. Über diese Schnittstelle 11 werden Steuerbefehle an die Einrichtung 8 und umgekehrt übermittelt, um beispielsweise die Reglerstellung 9, 10 zu simulieren.

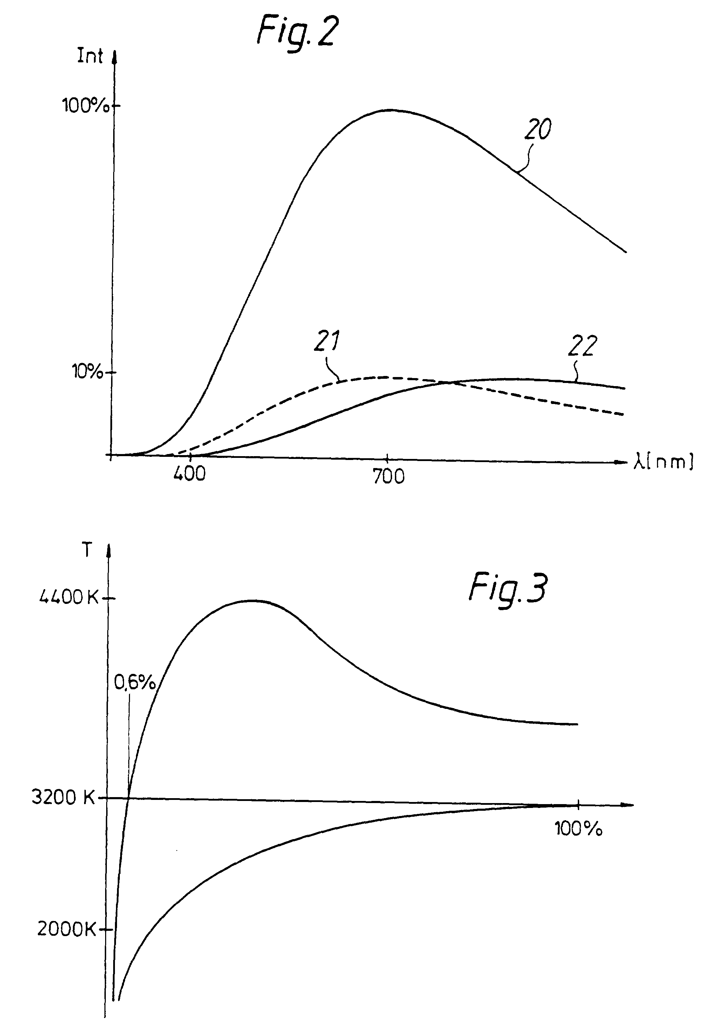

Die Figur 2 zeigt Planck-Kurven 20, 21 und 22 der Emissionsspektren einer Halogenglühlampe für verschiedene Betriebsströme. Die Kurve 20 kennzeichnet die Halogenlampe mit Nennbetriebsstrom entsprechend einer Farbtemperatur von 3200 K. Im Gegensatz zu dieser maximalen Intensität, wird das Emissionsspektrum der gleichen Halogenglühlampe bei ca. 10 % Intensität durch die Planck-Kurve 22 mit 2400 K charakterisiert. Aus dem Vergleich dieser beiden Kurven 20, 22 wird deutlich, daß bei abnehmenden Intensitäten bzw. bei reduziertem Betriebsstrom, die spektrale Emission der Lampe im Blauen überproportional abnimmt.

Die Kurve 21 zeigt eine Planckfunktion für ein Beleuchtungslicht mit 3200 K bei ca. 10 % Intensität. Aus dem Vergleich der Kurven 21 und 22 wird deutlich, daß diese Kombination aus Farbtemperatur und Intensität nicht durch eine Strom/-Spannungsänderung einer einzigen Halogenlampe erreicht werden kann, sondern ein zusätzlicher Anteil von blauem Licht zugemischt werden muß. Dieser fehlende Farbanteil wird erfindungsgemäß durch die Nebenlichtquelle 5 mit dem Konversionsfilter 6 ausgeglichen.

Die Figur 3 zeigt ein Diagramm des Regelbereichs des erfindungsgemäßen Beleuchtungssystems mit Halogenlampen, wie sie üblicherweise bei Mikroskopbeleuchtungen verwendet werden. Bei einer Farbtemperatur von 3200 K ist die Gesamtintensität des Systems von 100 % bis ca. 0,6 % relativer Intensität des Beleuchtungssystems voll regelbar. Davon abweichende Farbtemperaturen sind mit der Beleuchtungsanordnung im Rahmen des dargestellten Regelbereichs für beliebige Intensitäten einstellbar. Der hier dargestellte Regelbereich ist an eine bestimmte Lampen-/Filter-/Teilerspiegel-Kombination gebunden. Die Veränderung eines dieser Parameter, z.B. durch die Verwendung eines orangen Konversionsfilters oder dichromatischen Teilerspiegels, ergibt einen anderen Regelbereich.

Die Funktionsweise der Erfindung wird anhand des Ausführungsbeispiels der Figur 1 näher erläutert.

Die im Mikroskopstativ 1 integrierte Hauptlichtquelle 4 ist über die Stromversorgungsleitung 12 mit der Steuereinrichtung 8 elektrisch verbunden. Die Nebenlichtquelle 5 ist in dem separaten Gehäuse 3 angeordnet, welches als Modul ausgebildet ist und das blaue Konversionsfilter 6 und den Teilerspiegel 7 aufweist. Das gesamte Modul 3 ist an das Mikroskopstativ 1 ankoppelbar ausgeführt. Dabei wird der Teilerspiegel 7 im Beleuchtungsstrahlengang 2 angeordnet. Die Stromversorgung für die Nebenlichtquelle 5 erfolgt über die elektrische Leitung 13 mit der Steuereinrichtung 8. Über die an der Steuereinrichtung 8 vorgesehenen Regler 9 und 10 können die Helligkeit und die Farbtemperatur des Beleuchtungslichts gewählt werden. Der in dieser Zeichnung mit dargestellte Joystick 19 kann dabei die Funktionen der beiden einzelnen Regler 9 und 10 übernehmen.

Die Helligkeit des Beleuchtungslichts wird ausgehend von 100 % der vom Strahlenteiler 7 durchgelassenen Intensität der Hauptlichtquelle 4 dadurch geregelt, daß in Abhängigkeit von der Reglerstellung 10, die in der Speichereinheit 23 abgelegten zugehörigen Stromwerte der Steuereinrichtung 8 zugeführt und die beiden Lichtquellen 4, 5 über die zugehörigen Netzteile entsprechend angesteuert werden. Das führt dazu, daß die Helligkeit der Hauptlichtquelle 4 gemindert wird und gleichzeitig, zur Kompensation des jetzt fehlenden blauen Lichtanteils, die Nebenlichtquelle 5 eingeschaltet wird. Über den Teilerspiegel 7 wird das Licht der Nebenlichtquelle 5 in den Beleuchtungsstrahlengang 2 eingespiegelt. Der Regelbereich des beschriebenen Ausführungsbeispiels ist in der Figur 3 dargestellt. Ausgehend von 100 % Gesamtintensität (z.B. 100 % Intensität der Hauptlichtquelle 4 und 0 % Intensität der Nebenlichtquelle 5) läßt sich das Beleuchtungslicht bei 3200 K bis auf ca. 0,6 % Gesamtintensität farbneutral regeln. Diese farbneutrale Regelung entspricht einer Bewegung von rechts nach links parallel zur Abszisse in der Figur 3.

Analog zu dieser beschriebenen farbneutralen Helligkeitsregelung erfolgt die helligkeitsneutrale Farbtemperaturregelung mit dem gleichen Aufbau gemäß der Figur 1. Diese Regelung entspricht dann einer Bewegung parallel zur Ordinate in der Figur 3. Die Möglichkeiten zur Einstellung der gewünschten Farbtemperatur sind in dem Ausführungsbeispiel mit einem blauen Konversionsfilter 6, innerhalb des in der Figur 3 dargestellten Bereichs T, möglich. Auch hier erfolgt die Einstellung über eine Änderung des Lampenstroms der Haupt- und Nebenlichtquelle. Im Bedienpult 8 ist dazu ein separater Regler 9 vorgesehen. Über die Reglerstellung und abgespeicherte Stromwerte bzw. Stromwertepaare werden die beiden Lichtquellen 4 und 5 angesteuert.

Die beschriebenen Regelungen des mikroskopischen Beleuchtungslichts lassen sich selbstverständlich auch gleichzeitig, innerhalb der in der Figur 3 gezeigten Bereichen, einstellen. Andere Wahlbereiche zur Einstellung sind durch die Verwendung von anderen Filtern, Teilern oder auch anderen Lichtquellentypen möglich.

## Patentansprüche

1. Verfahren zur farbneutralen Helligkeitsregelung für ein mikroskopisches Beleuchtungssystem, mit einem Regler zur Einstellung des Lampenstroms und einem Filter zur Beeinflussung der Farbtemperatur des Beleuchtungslichtes, **dadurch gekennzeichnet,** daß über die Einstellung des Lampenstroms einer Hauptlichtquelle die Helligkeit variiert und die dadurch veränderte Farbtemperatur des Beleuchtungslichtes über eine gleichzeitige Änderung des Lampenstroms einer mit dem Filter versehenen Nebenlichtquelle kompensiert wird.

2. Verfahren zur helligkeitsneutralen Farbtemperaturregelung für ein mikroskopisches Beleuchtungssystem, mit einem Regler zur Einstellung des Lampenstroms und einem Filter zur Beeinflussung der Farbtemperatur des Beleuchtungslichtes, **dadurch gekennzeichnet,** daß über die Einstellung des Lampenstroms einer mit dem Filter versehenen Nebenlichtquelle die Farbtemperatur variiert und die dadurch veränderte Helligkeit des Beleuchtungslichtes über die gleichzeitige Änderung des Lampenstroms einer Hauptlichtquelle kompensiert wird.

3. Einrichtung zur Durchführung des Verfahrens nach Anspruch 1 und/oder Anspruch 2, bestehend aus einer Hauptlichtquelle (4) und einer Nebenlichtquelle (5) zur Erzeugung von Beleuchtungslicht für ein mikroskopisches Beleuchtungssystem;
einem im Strahlengang der Nebenlichtquelle (5) angeordneten Filter (6) zur Beeinflussung der Farbtemperatur des Beleuchtungslichtes;
einer Steuereinrichtung (8), welche zur farbneutralen Helligkeitsregelung und/oder der helligkeitsneutralen Farbtemperaturregelung des Beleuchtungslichtes zwei getrennt voneinander arbeitende Regler (9, 10) zur Einstellung der Lampenströme für die Haupt- (4) und Nebenlichtquelle (5) aufweist.

4. Einrichtung nach Anspruch 3, dadurch gekennzeichnet, daß die Steuereinrichtung (8) eine Speichereinheit (23) aufweist, in der die Stromwerte zur Steuerung der Haupt- (4) und Nebenlichtquelle (5) abgespeichert sind.

5. Einrichtung nach mindestens einem der Ansprüche 3 - 4, dadurch gekennzeichnet, daß zur Einkopplung der beiden Lichtquellen (5, 6) in den mikroskopischen Beleuchtungsstrahlengang (2) ein teildurchlässiger Spiegel (7) vorgesehen ist.

6. Einrichtung nach mindestens einem der vorherigen Ansprüche, dadurch gekennzeichnet, daß die Steuereinrichtung (8) mindestens eine Schnittstelle (11) zum Anschluß an einen Rechner (16) und/oder an eine Fotosteuereinrichtung (15) aufweist und die Helligkeitsregelung und/oder die Farbtemperaturregelung über diese Schnittstelle(n) (15, 16) femsteuerbar ausführbar ist.

7. Einrichtung nach Anspruch 3 - 6, dadurch gekennzeichnet, daß der oder die Regler (9, 10) als Mehrstufenschalter ausgebildet ist (sind).

8. Einrichtung nach Anspruch 3 - 6, dadurch gekennzeichnet, daß ein Doppelachsen-Schalthebel (Joystick) (19) vorgesehen ist, der die Funktionen der beiden einzelnen Regler (9, 10) übernimmt.

9. Einrichtung nach Anspruch 5 - 8, dadurch gekennzeichnet, daß die Nebenlichtquelle (5) zusammen mit dem teildurchlässigen Spiegel (7) in einem separaten Gehäuse (3) angeordnet und dieses extern an das Mikroskopstativ (1) ankoppelbar ausgebildet ist.

## Claims

1. Method for the colour-neutral brightness regulation for an illumination system of a microscope, with a regulator for the setting of the lamp current and a filter for influencing the colour temperature of the illuminating light, characterised thereby, that the brightness is varied by way of the setting of the lamp current of a main light source and the thereby changed colour temperature of the illuminating light is compensated for by a simultaneous change in the lamp current of an auxiliary light source provided with the filter.

2. Method for the brightness-neutral colour temperature regulation for an illumination system of a microscope, with a regulator for the setting of the lamp current and a filter for influencing the colour temperature of the illuminating light, characterised thereby, that the colour temperature is varied by way of the setting of the lamp current of an auxiliary light source provided with the filter and the thereby changed brightness of the illuminating light is compensated for by a simultaneous change in the lamp current of a main light source.

3. Equipment for the performance of the method according to claim 1 and/or claim 2 and consisting of a main light source (4) and an auxiliary light source (5) for the production of illuminating light for an illumination system of a microscope, a filter (6) arranged in the ray path of the auxiliary light source (5) for influencing the colour temperature of the illuminating light and a control equipment (8), which comprises two regulators (9, 10) each operating separately of the other for the setting of the lamp currents for the main light source (4) and the auxiliary light source (5) for the colour-neutral brightness regulation and/or for the brightness-neutral colour temperature regulation.

4. Equipment according to claim 3, characterised thereby, that the control equipment (8) comprises a storage unit (23), in which the current values for the control of the main light source (4) and the auxiliary light source (5) are stored.

5. Equipment according to at least one of the claims 3 and 4, characterised thereby, that a translucent mirror (7) is provided for the coupling of both the light sources (5, 6) into the illuminating ray path (2) of the microscope.

6. Equipment according to at least one of the preceding claims, characterised thereby, that the control equipment (8) comprises at least one interface (11) for connnection to a computer (16) and/or to a photo-control equipment (15) and the brightness regulation and/or the colour temperature regulation are/is performable by remote control by way of the interface(s) (15, 16).

7. Equipment according to the claims 3 to 6, characterised thereby, that the or each regulator (9, 10) is constructed as multistage switch.

8. Equipment according to the claims 3 to 6, characterised thereby, that a bi-axial switch lever (joystick) (19) is provided, which takes over the functions of both the individual regulators (9, 10).

9. Equipment according to the claims 5 to 8, characterised thereby, that the auxiliary light source (5) together with the translucent mirror (7) is arranged in a separate housing (3) and this is constructed to be couplable externally to the microscope stand (1).

## Revendications

1. Procédé pour le réglage de la luminosité, neutre au niveau de la couleur, pour un système d'éclairage de microscope, avec un régulateur pour l'établissement du courant de lampe et un filtre pour influencer la température de couleur de la lumière d'éclairage, caractérisé en ce que la luminosité est modifiée par le réglage du courant de lampe d'une source de lumière principale et la température de couleur ainsi modifiée de la lumière d'éclairage est compensée par une modification simultanée du courant de lampe d'une source de lumière secondaire pourvue d'un filtre.

2. Procédé pour le réglage de la température de couleur, neutre quant à la luminosité, pour un système d'éclairage de microscope, avec un régulateur pour l'établissement ou le réglage du courant de lampe et un filtre pour influencer la température de couleur de la lumière d'éclairage, caractérisé en ce que la température de couleur est modifiée par le réglage du courant de lampe d'une source de lumière secondaire pourvue du filtre et que la luminosité ainsi modifiée de la lumière d'éclairage est compensée par une modification simultanée du courant de lampe d'une source de lumière principale.

3. Agencement pour la mise en oeuvre du procédé selon la revendication 1 et/ou la revendication 2, comprenant une source de lumière principale (4) et une source de lumière secondaire (5) pour la production d'une lumière d'éclairage pour un système d'éclairage de microscope ;
un filtre (6) disposé dans la marche des rayons de la source de lumière secondaire (5) pour influencer la température de couleur de la lumière d'éclairage ;
un dispositif de commande (8) qui comprend pour le réflage de la luminosité , neutre quant à la couleur et/ou le réglage de la température de couleur, neutre quant à la luminosité, de la lumière d'éclairage, deux régulateurs (9, 10) fonctionnant séparément l'un de l'autre pour l'établissement ou le réglage des courants de lampe pour les sources de lumière principale (4) et secondaire (5).

4. Agencement selon la revendication 3, caractérisé en ce que le dispositif de commande (8) comprend une unité de stockage (23) dans laquelle sont stockées les valeurs de courant pour la commande des sources de lumière principale (4) et secondaire (5).

5. Agencement selon au moins une des revendications 3-4, caractérisé en ce qu'un miroir partiellement transparent (7) est prévu pour l'introduction des deux sources de lumière (5, 6) dans la marche des rayons d'éclairage de microscope (2).

6. Agencement selon au moins une des revendications précédentes, caractérisé en ce que le dispositif de commande (8) comprend au moins un interface (11) pour le raccordement à un ordinateur (16) et/ou à un dispositif de commande photographique (15) et le réglage de luminosité et/ou le réglage de température de couleur peuvent être accomplis à distance par l'intermédiaire de cet (ces) interface(s) (15, 16).

7. Agencement selon la revendication 3-6, caractérisé en ce que le ou les régulateurs (9, 10) sont réalisés sous forme de commutateurs à paliers multiples.

8. Agencement selon la revendication 3-6, caractérisé en ce qu'un levier de commutation à deux axes (Joystick) (19) est prévu qui accomplit les fonctions des deux régulateurs individuels (9, 10).

9. Agencement selon la revendication 5-8, caractérisé en ce que la source de lumière secondaire (5) ensemble avec le miroir partiellement transparent (7), sont disposés dans un boîtier séparé (3) et celui-ci est configuré de façon à pouvoir être rapporté extérieurement sur le pied de microscope (1).
